(19) **Europäisches Patentamt** **European Patent Office** **Office européen des brevets**

(11) **EP 3 987 396 B1**

(12) **EUROPEAN PATENT SPECIFICATION**

(45) Date of publication and mention of the grant of the patent:
**08.04.2026 Bulletin 2026/15**

(21) Application number: **20736776.4**

(22) Date of filing: **18.06.2020**

(51) International Patent Classification (IPC):
*H04L 41/084* (2022.01)     *H04L 41/16* (2022.01)
*H04L 41/342* (2022.01)     *H04L 41/50* (2022.01)
*G06F 9/455* (2018.01)     *G06F 9/50* (2006.01)
*H04L 41/5054* (2022.01)     *H04L 41/5051* (2022.01)

(52) Cooperative Patent Classification (CPC):
**G06F 9/5005; G06F 9/45558; G06F 9/5077; H04L 41/342; H04L 41/5051; H04L 41/5054; H04L 41/5058;** H04L 41/0846; H04L 41/16; Y04S 40/00

(86) International application number:
**PCT/IB2020/055724**

(87) International publication number:
**WO 2020/255025 (24.12.2020 Gazette 2020/52)**

(54) **METHOD AND SYSTEM FOR DEPLOYING A NEW SERVICE FUNCTION CHAIN (SFC) BASED ON SIMILARITIES WITH PREVIOUSLY DEPLOYED SFCS**

VERFAHREN UND SYSTEM ZUM EINSATZ EINER NEUEN DIENSTFUNKTIONSKETTE (SFC) BASIEREND AUF ÄHNLICHKEITEN MIT ZUVOR EINGESETZTEN SFCS

PROCÉDÉ ET SYSTÈME DE DÉPLOIEMENT D'UNE NOUVELLE CHAÎNE DE FONCTIONS DE SERVICE (SFC) SUR LA BASE DE SIMILARITÉS AVEC DES SFC PRÉCÉDEMMENT DÉPLOYÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.06.2019 US 201962862939 P**

(43) Date of publication of application:
**27.04.2022 Bulletin 2022/17**

(73) Proprietor: **Telefonaktiebolaget LM Ericsson (publ)**
**164 83 Stockholm (SE)**

(72) Inventors:
• **SUWI, Hanan**
  **Montreal, Québec H3C 1N2 (CA)**
• **KARA, Nadjia**
  **Kirkland, Québec H9H 4Z5 (CA)**
• **EDSTRÖM, Claes Göran Robert**
  **Québec H9W 1S2 (CA)**

(74) Representative: **Murgitroyd & Company**
**165-169 Scotland Street**
**Glasgow G5 8PL (GB)**

(56) References cited:
**CN-A- 107 332 913     US-A1- 2017 126 792**

• **BO YI ET AL: "A Generalized VNF Sharing Approach for Service Scheduling", IEEE COMMUNICATIONS LETTERS., vol. 22, no. 1, 1 January 2018 (2018-01-01), US, pages 73 - 76, XP055730954, ISSN: 1089-7798, DOI: 10.1109/ LCOMM.2017.2761874**
• **TUNG-WEI KUO ET AL: "Deploying Chains of Virtual Network Functions", IEEE / ACM TRANSACTIONS ON NETWORKING, IEEE / ACM, NEW YORK, NY, US, vol. 26, no. 4, 1 August 2018 (2018-08-01), pages 1562 - 1576, XP058416729, ISSN: 1063-6692, DOI: 10.1109/ TNET.2018.2842798**

EP 3 987 396 B1

**Description**

TECHNICAL FIELD

The present disclosure relates to network function virtualization and service function chaining.

BACKGROUND

In recent years, industrial and academic fields have begun focusing on Network Function Virtualization (NFV), as a shift is operating towards software-based components which function as Virtual Network Functions (VNFs). This shift towards software-based components allows optimization of hardware utilization, because hardware computing resources can be shared. These VNFs constitute the building blocks of these software-based components and may be chained to provide Service Function Chains (SFCs).

Cloud services portability as well as standardized management is possible because of the Topology and Orchestration Specification for Cloud Applications (TOSCA) that was commenced in 2013 as a standardization from OASIS consortium.

TOSCA has been developed for expressing the semantics necessary for the organization of a set of resources or components for particular lifecycle states that has complicated interdependency constraints. TOSCA can also help in solving various IT orchestration problems. Although its main aim was focused on application, the TOSCA technical committee has actively extended into other domains including Network Function Virtualization (NFV) and Software Defined Networks (SDN). Working in tandem with the ETSI NFV Industry Work Group along with other NFV communities such as open source, the TOSCA technical committee has progressed considerably in devising a TOSCA Simple Profile for NFV that can help TOSCA extend to the software-defined network services including virtual network routers, multi-function devices, and switches.

TOSCA's flexibility can eventually offer its specific advantages to other domains beside cloud, such as Internet of Things (IoT) as well as large-scale distributed applications emphasizing new technologies including Big Data, manufacturing, etc.

The utilization of cloud computing to outsource services and data has a main problem of security, particularly concerning the enterprise segment. Hence, it is crucial to agree regarding a common standard to implement, describe, and realize security policies concerning cloud service models. One of the placement policies which have been examined in several studies in cloud computing environment is affinity/anti-affinity placement policies. Numerous attempts have also been conducted in the literature to solve the problem of SFC placement and mapping.

In NFV, there may be some unique requirements or restrictions of customers and/or service providers concerning the placement, VNF lifecycle management operations, and routing regarding Service Function Chain (SFC) requests. As stated in ETSI NFV standard group's Service Quality Metrics, for example, anti-affinity placement constraints help in allocating the same SFC's VNFs in diverse physical hosts or different datacenters for enhancing their service robustness and resilience. There may also be requirements concerning legislative, economic, privacy, and efficiency concerns. Hence, traditional embedding approaches that can specify only node and link requirements are not adequate anymore.

Different types of policies/rules could be enforced by the help of standards such as TOSCA.

There is a need to efficiently perform SFC placement and mapping, and a novel approach should be introduced to reduce the mapping and placement time. In the literature, researchers have focused on finding near optimal solution using heuristics for this NP-hard problem.

Document US 2017/126792 A1 discloses a method implemented by a computing device to optimize resource usage of service function chains (SFCs) in a network using machine learning. The method includes obtaining, from an autoscale machine learning (ML) system associated with a virtual network function (vNF), a suggested adjustment to an amount of resources provisioned for the vNF. The autoscale ML system is trained online using machine learning to predict an amount of resources to be utilized by the vNF. The autoscale ML system is configured to receive as input an amount of resources currently utilized by the vNF and an amount of resources currently available to the vNF, determine using machine learning the suggested adjustment to the amount of resources provisioned for the vNF based on the input, and output the suggested adjustment. The method further includes providing the suggested adjustment to a resource re-allocator component.

SUMMARY

According to the present disclosure, methods, a system and a non-transitory computer-readable medium according to the independent claims are provided. Developments are set forth in the dependent claims.

To the best of our knowledge, none of the studies in the literature have checked the similarity between the received SFC requests and the existing ones when studying the SFC placement and mapping problem. There is no approach to detect similarity between nodes or links of SFCs that enables to check similarity for nodes links and attributes at the same time as finding an exact or partial match between SFCs.

Accordingly, a new functionality to the NFV Management and Network Orchestration (MANO) layer by mapping a similarity manager framework into the NFV Orchestrator (NFVO) is proposed. The proposed framework enables to find similarity between a new SFC request and already deployed SFCs. It includes the SFC graph decomposition, SFC graph translator, SFC similarity checker, translated service graphs repository and similarity rate repository. It allows reducing time for SFC mapping and placement as well as for policy redundancy and conflict detection.

Firstly, any incoming new SFC request is represented as a graph (VNF nodes, links and attributes) and then it is converted to a vector representation to make it easier for the SFC similarity checker entity to check if two SFCs are close enough in the vector space. The whole SFC graph is decomposed to a list of sub-service graphs to check the exact/partial matching between SFCs.

To find the similarity rate between the new SFC request and any deployed network service stored in the network service catalog, three phases can be executed, namely, the frequent sub-service mining process, graph embedding, and finally finding the similarity rate between the new SFC request and the existing services and to check if there is an exact/partial matching. The considered thresholds for the exact matching are between 0.99 and 1 and for the partial/subset matching the considered thresholds are between 0.7 and 0.99.

The SFC service similarity functionality can handle different types of SFCs (different SFC graph linear and non-linear, different SFC size, various attributes) and can find exact and partial matching between SFCs. Frequent sub-graph mining increases the number of potential sub-graph that are common with those composing an SFC request that can be used to find partial matching between SFCs. Graph-to-vector translation enables generating d-dimensional vector space representation of SFC graphs in order to ease similarity detection between SFCs and reduce time for SFC placement and for policy redundancy and conflict detection. The similarity detection strategy can be used as a baseline for resource management and prediction.

There is provided a method for deploying a new service function chain (SFC) based on similarities with previously deployed SFCs. The method comprises receiving a request for the new SFC; generating a vector representation for the requested new SFC; comparing the vector representation of the requested new SFC with vector representations of previously deployed SFCs; identifying a previously deployed SFC similar to the requested new SFC; and mapping and instantiating a copy of the previously deployed SFC on one or more physical server.

There is provided a system for deploying a new service function chain (SFC) based on similarities with previously deployed SFCs comprising processing circuits and a memory. The memory contains instructions executable by the processing circuits whereby the system is operative to execute any of the steps described herein.

There is provided a non-transitory computer readable media having stored thereon instructions for deploying a new service function chain (SFC) based on similarities with previously deployed SFCs. The instructions comprise any of the steps described herein.

The methods provided herein present improvements to the way deployment of service function chains operate.

BRIEF DESCRIPTION OF THE DRAWINGS

Figure 1 is a flowchart illustrating steps of an example method.
Figure 2 is a schematic illustration of a system comprising a similarity manager.
Figure 3a-d illustrate pseudo code examples.
Figure 4a is a schematic illustration of graph-to-vector conversion.
Figure 4b is a schematic illustration of cosine similarity between two graphs.
Figure 5 is a chart illustrating an example of the total number of extracted sub-service graphs for the new SFC request.
Figure 6 is a chart illustrating an example of the execution time, in seconds, to extract the sub-services graphs for the new SFC request.
Figure 7 is a chart illustrating an example of the effects of embedding dimension d on performance of the proposed algorithm.
Figure 8 is a chart illustrating an example of execution time of finding the similarity rate.
Figure 9 is a chart illustrating an example of total execution time.
Figure 10a is a chart illustrating an example of the average time needed to find the mapping solution.
Figure 10b is a chart illustrating an example of the average number of network function instances.
Figure 11 is a chart illustrating an example of the total processing time to deploy the new SFC request with different cases.
Figure 12 is an example block diagram showing the main components of the similarity manager.
Figure 13 is a flowchart of an example method.

Figure 14 is a schematic illustration of a virtualization environment in which some functions may be implemented.

DETAILED DESCRIPTION

Various features will now be described with reference to the figures to fully convey the scope of the disclosure to those skilled in the art.

Many aspects will be described in terms of sequences of actions or functions. It should be recognized that according to some aspects, some functions or actions could be performed by specialized circuits, by program instructions being executed by one or more processors, or by a combination of both.

Further, computer readable carrier or carrier wave may contain an appropriate set of computer instructions that would cause a processor to carry out the techniques described herein.

The functions/actions described herein may occur out of the order noted in the sequence of actions or simultaneously. Furthermore, in some illustrations, some blocks, functions or actions may be optional and may or may not be executed; these are generally illustrated with dashed lines.

Hereinbelow, some models are presented.

**Skip-gram model for word embedding:** word2vec is one of the modern neural methods, which is an efficient neural approach to learn the distributed representation of words using a model called "Skip-gram". Word2vec is used to embed the words into a low-dimensional vector space, it works based on the rationale that "the words appearing in similar contexts tend to have similar meanings and hence should have similar vector representations".

Skip-Gram (SG) model is used to find word representations that are useful to predict the surrounding words in a given sentence or document. More precisely, given a sequence of words $\{w_1, w_2, ... , w_T\}$, the target word $w_t$ whose representation needs to be learned, and the length of the context window $c$, the objective of SG model is to maximize the log probability of predicting the context words $w_{t-c}, ... , w_{t+c}$

$$\sum_{t=1}^{T} \log \Pr(w_{t-c}, ..., w_{t+c} | w_t ) \qquad (1)$$

Where $w_{t-c}, ..., w_{t+c}$ are the context words which appear nearby the target word $w_t$. The probability $\Pr(w_{t-c}, ..., w_{t+c} | w_t )$ is computed as:

$$\Pr(w_{t-c}, ..., w_{t+c} | w_t ) = \prod_{-c \leq j \leq c, j \neq 0} \Pr(w_{t+j} | w_t) \qquad (2)$$

Furthermore, $\Pr(w_{t+j} | w_t)$ is defined as:

$$\Pr(w_{t+j} | w_t) = \frac{\exp(w_{t+j} . w_t )}{\sum_{i=1}^{\gamma} \exp(w_i . w_t )} \qquad (3)$$

Where $w_{t+j}$ and $w_t$ are the vectors of words and $\gamma$ is the vocabulary size (i.e., number of words in the vocabulary).

**Negative sampling:** Equation 3 is very expensive to compute when the vocabulary $\gamma$ contains large number of words. Hence, NEGative sampling (NEG) is defined to solve this problem and train the Skip-gram model. NEG randomly selects a small subset of words that are not within the target word's context and define them as negative samples and updates their embedding in every iteration instead of considering all words in $\gamma$. Accordingly, NEG ensures that if a word w appears in the context of another word $w'$, then the vector representation of w is closer to that of $w'$ compared to negative samples.

**PV-DBOW model for Document Embedding:** Inspired by word2vec, the method doc2vec is proposed to learn paragraph and document embedding vector representation. Paragraph Vector-Distributed Bag-of-Words (PV-DBOW) is an instance of skip-gram model used by doc2vec to predict the embedding vectors of words contained in a whole large document. More specifically, given a set of documents $D = \{d_1, d_2, ... , d_n\}$, the target document $d_t \in D$ whose representation need to be learnt, and a sequence of words $w(d_i) = \{w_1, w_2, ... , w_k\}$ sampled from the target document $d_t$. The training objective of PV-DBOW is to maximize the log probability of predicting the words $w_1, w_2, ... , w_k$ which appear in the document $d_t$.

**Frequent sub-graphs mining (FSM):** The goal of frequent sub-graph mining process is to extract all the frequent subgraphs, in a given data set, whose occurrence (i.e., support) counts are above a defined threshold value. The main idea behind FSM is to 'grow' candidate subgraphs, in either a breadth-first or depth-first manner (candidate generation), and then determine whether the identified candidate subgraphs occur frequently enough in the graph data set for them to be considered interesting (support counting). Many algorithms have been proposed to extract the frequent subgraph such as, FFSM, Gaston, gSpan ...etc.

gSpan use a depth-first search to find the candidate frequent subgraphs without candidate generation. gSpan extract the frequent subgraphs one by one using a search tree. It starts with a set of frequent subgraphs containing only one vertix. And then, for each 1-node frequent subgraph, generates a new subgraph by adding one edge each time. The source code of the gSpan approach is publicly available.

Tables 1 and 2 list some acronyms and notations used herein.

**Table 1:** List of Acronyms.

| Acronyms and Symbols | Description |
|---|---|
| NFV | Network Function Virtualization |
| VNF | Virtual Network Function |
| SFC | Service Function Chain |
| TOSCA | Topology and Orchestration Specification for Cloud Applications |
| PV-DBOW | Paragraph Vector Distributed Bag of Words |
| SDN | Software Defined Network |
| IoT | Internet of Things |
| NF | Network Function |
| SG | Skip-Gram |
| NEG | NEGative sampling |
| FSM | Frequent Subgraph Mining |
| NFV-MANO | NFV-MAnagement and Network Orchestration |
| NFVO | VNF Orchestrator |
| NS | Network Service |

**Table 2:** List of Notations.

| Notation | Description |
|---|---|
| $NS_g$ | Virtualized network service graphs $\{NS_{g1}, \ldots, NS_{gn}\}$ |
| $NS_{gi}$ | Virtualized network service graph i |
| $V_{vnf}$ | The set of VNF nodes in SFC |
| $E_{Vl}$ | The set of virtual links (VLs) connecting two VNFs |
| $A$ | The set of attributes for both the VNF nodes and virtual links $\{A_{cpu}, A_{mem}, A_{storage}, A_{BW}, A_{delay}, A_{policy}\}$ |
| $f_v: V_{vnf} \rightarrow A_v$ | Function to assign a set of attributes for VNF nodes |
| $f_e: E_{Vl} \rightarrow A_e$ | Function to assign a set of attributes for $E_{Vl}$ |
| $vl$ | Virtual link |
| $\varphi: V_{vnf} \rightarrow V'_{vnf}$ | Bijection function between two network services (two sets of VNF nodes) |
| $vnf_i$ | Virtual network function i |
| $subNS_g$ | Network sub service graph |
| $sup_{subNSg}$ | Support of sub service graph |
| $\delta$ | Minimum support threshold |
| $\mathcal{E}: NS_g \rightarrow \mathbb{R}^d$ | The embedding (translating) function |
| $\Phi(NS_{gj})$ | The embedding (translating) matrix for network service graph j |
| $NS_{catalog}$ | The catalog containing all the deployed network services |
| $\mathcal{F} req\_subNS$ | The frequent sub services |

(continued)

| Notation | Description |
|---|---|
| \|*\| | The total number of * available. * could be $NS_G$, $V_{vnfs}$, $E_{vls}$, $A_v$ or $A_e$ |

A new SFC request is represented as a unidirectional graph which is composed of a set of VNFs along with the virtual links between those VNFs to form the required service chaining. The attributes for each VNF and each link are also embedded in the graph. The required CPU cores, memory size and storage capacity attributes are defined for each VNF. On the other hand, attributes such as required bandwidth, end-to-end delay and affinity/anti-affinity policies are also defined for each link. It is worth mentioning that the method proposed herein can be easily extended to have more than three attributes for VNF and virtual link. A set of definitions are now being introduced.

**Definition 1.** Virtualized network service is represented as an attributed graph $NS_g = (V_{vnf}, E_{vl}, A)$, where $V_{vnf} = \{vnf_1, \ldots, unf_n\}$ is the set of VNF nodes, $E_{Vl} \subseteq (V_{vnf} \times V_{vnf})$ is the set of virtual interconnecting links which connect two VNFs, $E_{Vl} = \{vl_1, \ldots, vl_n\}$ and $A$ are the set of VNF nodes and Virtual links attribute types. We define a function $f_v: V_{vnf} \rightarrow A_v$ that assigns a set of attributes for VNF nodes, where each VNF node $vnf \in V_{vnf}$ is associated with three attributes in $A$; the number of CPU cores ($A_{cpu}$), Memory size ($A_{mem}$) and Storage capacity ($A_{storage}$). Similarly, a function $f_e: E_{Vl} \rightarrow A_e$ is defined to assign a set of attributes for $E_{Vl}$, a virtual link $vl \in E_{Vl}$ is associated with three attributes; the required bandwidth ($A_{BW}$), end-to-end delay ($A_{delay}$), and affinity or anti-affinity placement policy ($A_{policy}$), if there exists a set of VNF nodes and Virtual links attribute types.

Isomorphism exists between two objects (network services) if and only if there is a bijection function between the two sets of VNFs. A bijection function represents a one-to-one relationship between the two sets of VNFs and, to be satisfied, a set of conditions should be met: the number of VNF nodes and virtual links in both network services should be equal, the attributes for each VNF node and virtual link are exactly the same, and, finally, the same connection exists and connects the same VNFs nodes in the two network services.

**Definition 2.** Two NS graphs are denoted by $NS_g = (V_{vnf}, E_{vl}, A)$ and $NS'_g = (V'_{vnf}, E'_{vl}, A')$ respectively. $NS_g$ is isomorphic to another service $NS'_g$ denoted by $(NS_g \equiv NS'_g)$, if there is a bijection function $\varphi: V_{vnf} \rightarrow V'_{vnf}$ satisfying:

1.

$$\left|V_{vnf}\right| = \left|V'_{vnf}\right|,$$

where $|V_{vnf}|$ represent the number of VNF nodes in a NS graph,

2.

$$\left|E_{vl}\right| = \left|E'_{vl}\right|,$$

3.

$$\forall (vnf) \in V_{vnf}, (f_v(vnf) = f'_v(\varphi(vnf))),$$

4.

$$\forall (vnf_i, vnf_j) \in V_{vnf}, ((vnf_i, vnf_j) \in E_{vl} \Leftrightarrow (\varphi(vnf_i), \varphi(vnf_j)) \in E'_{vl}),$$

and

5.

$$\forall (vnf_i, vnf_j) \in E_{vl}, (f_e(vnf_i, vnf_j) = f'_e(\varphi(vnf_i), \varphi(vnf_j))).$$

The bijection $\varphi$ is an isomorphism between NS and NS'. Said differently, NS is isomorphic to NS' and vice versa.

One network service is a subservice of another network service if and only if the following four conditions are satisfied. Firstly, the set of VNFs existing in the first network service is a subset of the set of VNFs existing in the second network service. Secondly, the set of virtual links connecting VNFs in the first network service is the subset of virtual links connecting VNFs in the second network service. Thirdly, the attributes for each VNF node existing in the second subservice are exactly the same attributes existing in the first network service. And lastly, the same condition applies on the attributes for each virtual link existing in the first service and the second subservice, which obviously should be the same.

**Definition 3.** Given two NS graphs denoted by $NS_g = (V_{vnf}, E_{vl}, A)$ and $NS'_g = (V'_{vnf}, E'_{vl}, A')$ respectively, $NS_g$ is a subservice of $NS'_g$ denoted by $NS_g \subseteq NS'_g$, if:

1.

$$V_{vnf} \ \subseteq \ V_{vnf} \ ,$$

2.

$$E_{Vl} \ \subseteq \ E'_{Vl},$$

3.

$$\forall \ (vnf) \in \ V_{vnf} \ , (f_v(vnf) \ = \ f'_v(vnf))$$

4.

$$\forall \ (vnf_i \ , vnf_j) \in E_{vl} \ , (f_e\big(vnf_i \ , \ vnf_j\big) \ = \ f'_e\big(vnf_i \ , \ vnf_j\big)))$$

The isomorphism property can also be applied on subservices, which will be called a sub-service isomorphic. A network service $NS_g$ is claimed to be a sub-service isomorphic to another network service $NS''_g$ if and only if the first network service $NS_g$ is a subset of the second network service $NS'_g$ and if there is a subservice $NS''_g$ existing in the second network service $NS'_g$ which is exactly the same as the first network service $NS_g$ and that satisfies all the conditions in Definition 2.

**Definition 4.** A network service $NS_g = (V_{vnf}, E_{vl}, A)$ is sub-service isomorphic to $NS'_g = (V'_{vnf}, E'_{vl}, A')$, denoted by $NS_g \subseteq NS'_g$, if there exists a sub-subservice $NS''_g$ of $NS'_g$ such that $NS_g$ is isomorphic to $NS''_g$.

Another important definition is what is called the support of subservice, which mainly calculates the number of times where the sub service graph $subNS_g$ is contained in each $NS_{gi}$.

**Definition 5.** Given a set of virtualized network services $NS_{\mathcal{G}} = \{NS_{g1}, \dots, NS_{gn}\}$, the support of sub-service graph $subNS_g$, denoted by $sup_{subNS_g}$ is defined as the fraction of NS graphs in $NS_{\mathcal{G}}$, which containing $subNS_g$.

$$sup_{subNS_g} \ = \ \frac{\left|\{NS_{gi} \in NS_{\mathcal{G}} \ \middle| subNS_g \subseteq NS_{gi}\}\right|}{\left|NS_{\mathcal{G}}\right|} \qquad (4)$$

And the sub service graph is considered a frequent one if and only if the support value for this sub service is greater than or equal to the threshold $\delta$.

**Definition 6.** Given a minimum support threshold $\delta = (0 < \delta \leq 1)$, $subNS_g$ is **frequent** sub-service *if* $sup_{subNS_g} \geq \delta$.

As previously mentioned, each VNF is represented as a graph. This graph is considered as an input to the PV-DBOW (doc2vec) model, where each network service graph is treated as a document and the frequent sub-service as a word. The main objective of this embedding model is to convert the network service graph into a low d-dimensional vector.

**Definition 7.** Given a NS graph $NS_g = (V_{vnf}, E_{vl}, A)$ as an input, it is desired to learn the embedding of VNF nodes, VLs and associated attributes. The embedding function $\varepsilon$: $NS_g \rightarrow \mathbb{R}^d$ is used to map the input graph $NS_g$ into low d-dimensional vector space representation, where d is defined as the predefined dimensionality of embedding (i.e., 2-dimentional or 3-dimentional space).

After the embedding for all the existing graphs is accomplished, and the matrix $\Phi$ is generated, the similarity rate between the new SFC request and the existing ones can be calculated using formula 8, defined below.

**Definition 8.** Given a set of NS graphs $NS_{\mathcal{G}} = \{NS_{g1}, \dots, NS_{gn}\}$, the matrix $\Phi = [\varepsilon(NS_{g1}), \varepsilon(NS_{g2}), \dots, \varepsilon(NS_{gn})]$ contains the representation for every $NS_{gi} \in NS_{\mathcal{G}}$. The Similar rate denoted by SimilarRate between any two NS graphs is:

$$\text{SimilarRate}\ (\boldsymbol{NS_{gi}, NS_{gj}}) = \frac{\Phi(NS_{gj}) \cdot \Phi(NS_{gi})}{\|\Phi(NS_{gj})\|\ \|\Phi(NS_{gi})\|} \tag{5}$$

The range of values for the similarity rate will be between 0 and 1, where two network services are said to be exactly similar if the similarity rate is between the two predefined thresholds 0.99 and 1. $NS_g$ and $NS'_g$ are similar if $\varepsilon(NS_g)$ and $\varepsilon(NS'_g)$ are close to each other on the vector space and vice versa.

**Definition 9.** Two NS graphs are denoted by $NS_g = (V_{vnf}, E_{vl}, A)$ and $NS'_g = (V'_{vnf}, E'_{vl}, A')$ respectively. And the similarRate = $(0 < \text{similarRate} \leq 1)$. $NS_g$ is exactly similar to another service $NS'_g$ denoted $NS_g \equiv NS'_g$, if $0.99 < \text{similarRate}(NS'_g, NS_g) \leq 1$.

On the other hand, the predefined thresholds for the network service $NS_g$, to be a sub service of another sub service $NS'_g$, are between 0.7 to 0.99, as shown in the definition 10.

**Definition 10.** Two NS graphs are denoted by $NS_g = (V_{vnf}, E_{vl}, A)$ and $NS'_g = (V'_{vnf}, E'_{vl}, A')$ respectively, and $(0 < \text{similarRate} \leq 1)$. $NS_g$ is a sub-service of another service $NS'_g$ denoted $NS_g \subseteq NS'_g$, if $0.7 + < \text{similarRate}(NS'_g, NS_g) < 0.99+$

**The similarity manager:** In the normal operation of SFC placement and chaining (or provisioning), a set of correlated phases should be performed in a sequential manner which are: policy redundancy and conflict detection (and resolution), network function mapping, service scheduling and traffic routing. This is a daunting task that need to be optimized, and some of these phases can be skipped in the present approach due to the introduction of the similarity manager tool, which allows, in some cases, to skip the policy redundancy/conflict detection and placement and chaining. This is the primary advantage of this approach. Without doubt, the time needed to check the similarity between a new SFC request and the already deployed SFC in the NFV infrastructure will be smaller than the time needed for the policy redundancy/conflict detection and placement and chaining, which can be skipped in case of similarity existence and resource availability on the physical servers.

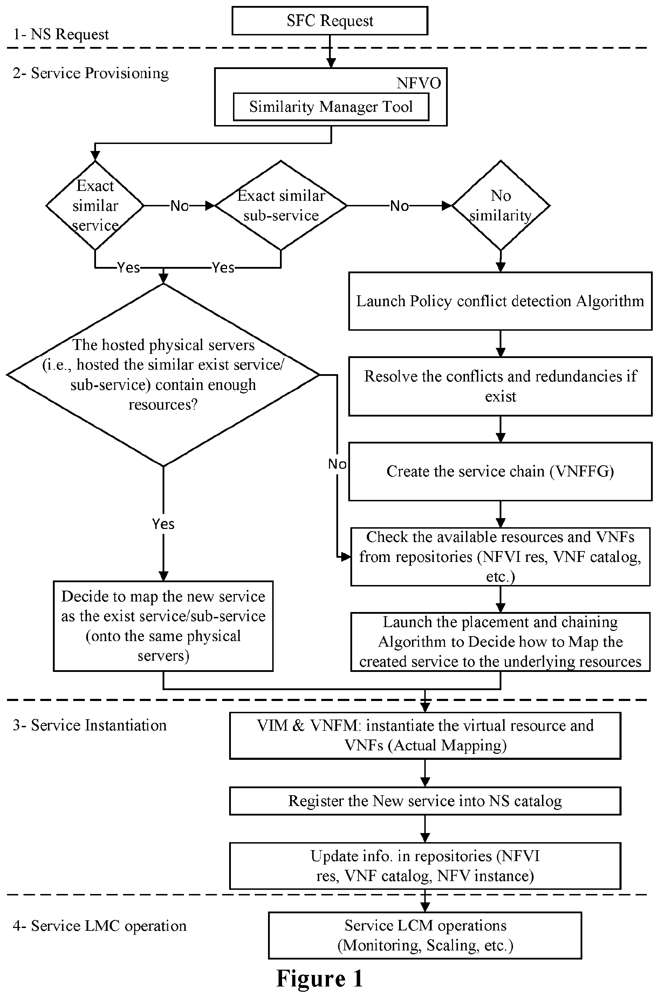

In the present approach, illustrated in figure 1, once the network service is received it is checked for exact/partial similarity with the other existing services/subservices, and, if an exact/partial similarity is found and there is available resources in the hosted physical servers, then it will directly be mapped to the similar existing service/subservice onto the same physical servers, which will significantly reduce the mapping time. Otherwise it will go through the normal network service provisioning in case of non-similarity (exact/partial similarity not found), where policy conflict and redundancy are checked and resolved if there is any conflict or redundancy among policies, service is chained, resources availability are scanned, and the placement and chaining algorithm is launched in order to decide how to map the new to-be-deployed SFC to the underlying resources.

In case where similarity exists but there are no available resources in the same physical servers, there will be no need to launch the policy redundancy and conflict detection algorithm, but the placement and chaining algorithm should be launched in order to find other servers to place the new SFC request. This can be done with a narrow search space since the type of server which is appropriate to host the new SFC request is known.

The service instantiation phase will be triggered only if the mapping and placement decision is taken, where the actual mapping is taking place by instantiating the virtual resources and VNFs, registering the new service in the network service catalogue and updating the information stored in the repositories. The final stage is where the lifecycle of the service is initiated.

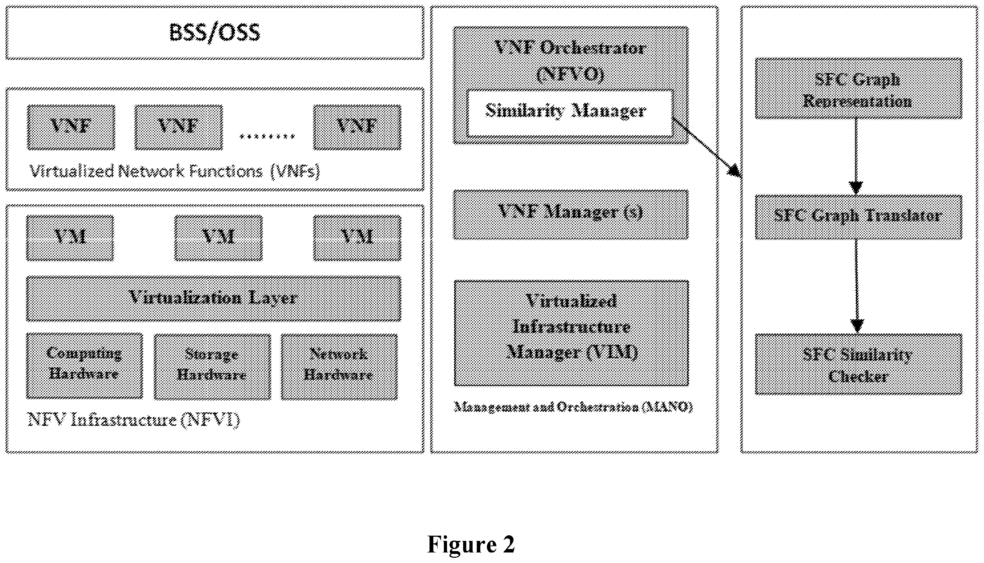

As shown in figure 2, the NFV MAnagement and Network Orchestration (NFV-MANO) layer is crucial in any NFV system as it maintains and controls VNFs overall operations. Hence, the proposed similarity manager is integrated into the NFV Orchestrator (NFVO) in the MANO Layer. In some implementations, it could be possible to place the similarity manager in other component of the NFV.

The similarity manager is composed of SFC graph representation (or decomposition), SFC graph embedding (or translator), SFC similarity checker, translated service graph repository and similarity rate repository. Firstly, any incoming new SFC request is represented as a graph (VNF nodes, links and attributes) and then it is converted to a vector representation to make it easier for the SFC similarity checker entity to check if a two SFCs are close enough in the vector space. SFC Graph representation (decomposition) enables to break-down the SFC service graph into a list of sub-service graphs. These sub-service graphs will be extracted using frequent sub-graph mining technique called "gSpan". SFC graph embedding (translator) allows to map the SFC service graph into d-dimensional vector representation using PV-DBOW machine learning embedding model. SFC Similarity Checker measures the similarity rate between the new incoming SFC request and the already provisioned/instantiated SFCs. The similarity between two SFCs is measured using Cosine similarity. Translated Service Graphs Repository acts as database, containing all SFC service graph vector representations obtained by Service Graph Translator. Similarity Rate Repository contains all the measured similarity rate between SFC services. This repository might be used by the MANO layer in future for prediction and management of resources

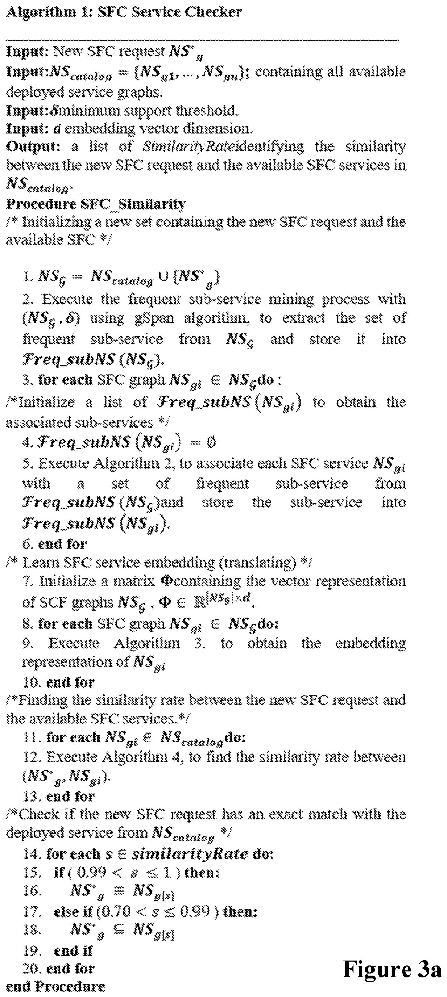

As shown in Algorithm 1, figure 3a, to find the similarity rate between the new SFC request and any existing network service stored in the $NS_{catalog}$, three phases are executed, namely, the graph presentation and frequent sub-service mining process, the graph translation, and finally finding the similarity rate between the new SFC request and the existing services and to check if there is an exact/partial match. The considered thresholds for the exact matching ($NS^*_g \equiv NS_{g[s]}$) are between 0.99 and 1 and for the partial/subset matching ($NS^*_g \subseteq NS_{g[s]}$) the considered thresholds are between 0.7 and 0.99.

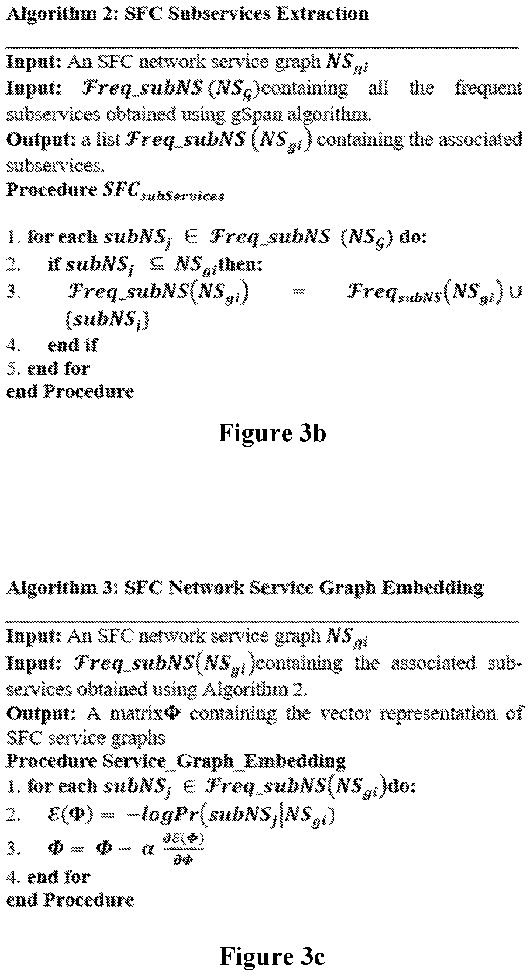

Sets of frequent sub-service $\mathcal{F}req\_subNS$ are extracted from the network service $NS_\mathcal{G}$ using the gSpan algorithm, which is depicted in Algorithm 2, figure 3b.

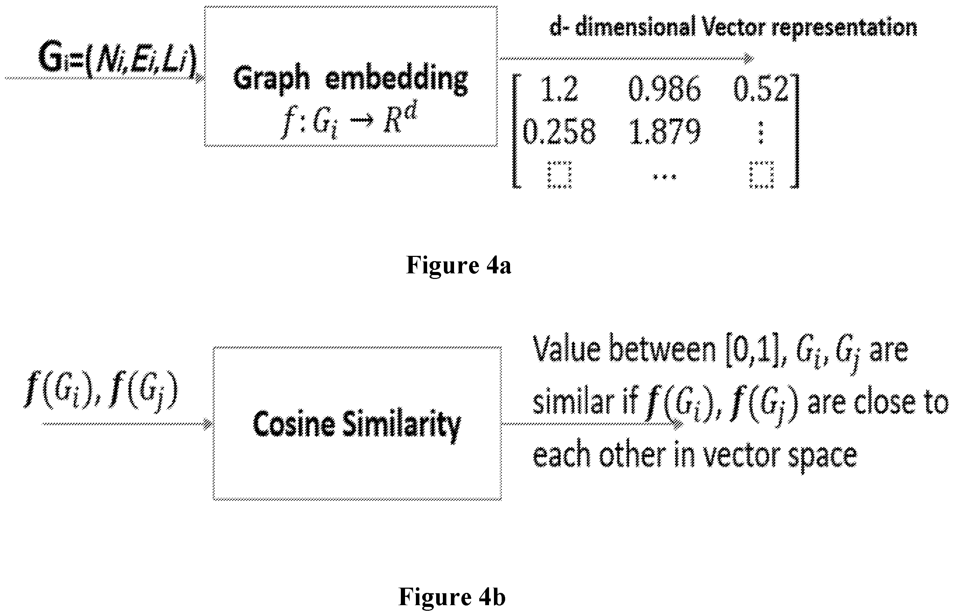

In Algorithm 3, figure 3c, the graph of the new SFC request is converted into a d dimensional vector representation using the formulas of the PV-DBOW embedding model, as also shown in figure 4a. This makes it easier to compare the similarity between any two given graphs in the vector space, taking as an input an SFC network service graph $NS_{gi}$ and the frequent sub-service for each network service.

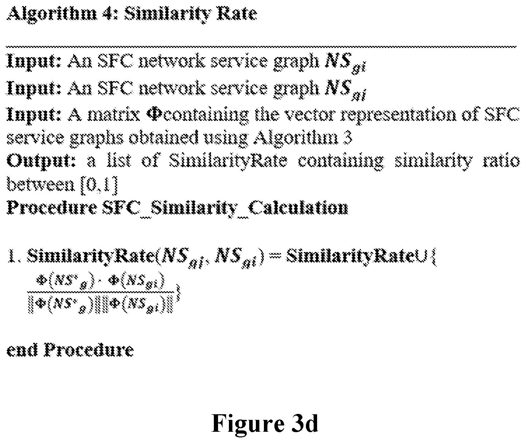

Lastly, the similarity between two network services ($NS_{gi}$ and $NS_{gj}$) is calculated as shown in Algorithm 4, figure 3d, with an output ratio between 0 and 1, as also depicted in the figure 4b.

Experimental setup and Analysis were conducted to assess capabilities of the method(s) described herein to discover the similarity rate between new incoming SFC request and available and deployed network services, in order to reduce the time of policy conflict and redundancy detection and/or SFC placement and chaining process.

*Evaluation Setup:* python 2.7 was use for all the experiments, with Intel (R) core (TM) i7-7700 CPU @ 3.60 GHZ with 16 GB RAM, running Ubuntu 16.04.6 LTS.

*Virtual Network service graph Datasets* were used for the first time in this work, to consider the similarity between virtualized network service graphs. NetworkX library was used to generate random virtual service graphs for testing. NetworkX is a python package used for creation, manipulation, and study of the structure of complex networks. It is worth mentioning that the topology of virtual network services considers a complex topology and is not limited to linear topologies. Table 3 illustrate an overview of the possible characteristics and requirements of the virtual network services.

**Table 3:** the characteristics of virtual network service graph.

| Parameter | Range/ Value |
|---|---|
| Number of VNFs in SFC service | [2, ...,25] virtual node |
| Required Bandwidth for virtual links | [100, ...,700] Mbps |
| End-to-End delay for virtual links | [100, ..., 500] ms |
| Required number of CPU cores for a VNF | [4, ..., 16] core |
| Required Memory usage for a VNF | [4, ..., 128] MB |
| Required Storage | [16, ..., 128] GB |
| Placement Constraints | [Affinity, Anti-Affinity, Or None] |
| topology | [Linear, Or Mesh] |

Four datasets were generated. The first data set containing small number of virtual network service graphs (i.e., the total number of existing and deployed services in NS catalog is small) and the network service itself is a simple one (e.g., number of VNFs ranging from 2 to 5). The second and third data sets are more complex and contains larger number of network services graphs and more complex chrematistics. Whereas the last data set contains 1000 network graphs.

Table 4 summarize the characteristics of the generated service graph datasets using NetworkX. Where $|NS_\mathcal{G}|$ is the number of the available virtual network services in NS catalog to be compared with the new incoming SFC request, avg. $|V_{vnfs}|$ and avg. $|E_{vls}|$ is average number of VNF nodes and virtual links in $NS_\mathcal{G}$ respectively, $|A_v|$ and $|A_e|$ are the total number of attributes assigned for VNF nodes (ex: CPU cores, Memory... etc.) and Virtual Links (ex, BW, delay, ... etc.) respectively.

**Table 4:** Statistics of generated network service graph datasets.

| Dataset | $|NS_\mathcal{G}|$ | Avg. $|V_{vnfs}|$ | Avg. $|E_{vls}|$ | $|A_v|$ | $|A_e|$ |
|---|---|---|---|---|---|
| DS1 | 10 | 2.9 | 1.7 | 87 | 43 |
| DS2 | 30 | 8.3 | 7.33 | 750 | 608 |

(continued)

| Dataset | $|NS_{\mathcal{G}}|$ | Avg. $|V_{vnfs}|$ | Avg. $|E_{vls}|$ | $|A_v|$ | $|A_e|$ |
|---|---|---|---|---|---|
| DS3 | 500 | 18.01 | 17.02 | 27024 | 22524 |
| DS4 | 1000 | 17.51 | 16.72 | 52548 | 50088 |

**Evaluation and Analysis:** The proposed method is evaluated in the case of the NFV orchestrator receiving a new request to deploy a new virtual service. Three distinct scenarios were tested on all the generated datasets described in Table 4, when receiving the same SFC request.

Table 5 illustrate the test scenarios, where *Percentage of common services* identifies the percentage of similarity and matching between the new incoming SFC request and the service graphs in a given dataset. For example, 10% means that 10% of services in a dataset have common VNF nodes, virtual links and attributes values with the new SFC request. 0% "the worst-case" means that all the services are totally different and there are no common nodes, links and attributes. Similarly, 50% is defined as "the average-case" where 50% of the services have common VNF nodes, virtual links and attributes with the new SFC request.

**Table 5:** Scenarios description.

| Scenarios | Percentage of common services (%) |
|---|---|
| S1 | 0% |
| S2 | 10% |
| S3 | 50% |

The SFC service checker algorithm, Algorithm 1 figure 3a, has three main steps. The main factors that effect on each step has been studied by running the aforementioned datasets and scenarios.

**Step1: Extract or find the Sub-service graphs of a given SFC:** When the proposed similarity manager receives the SFC request, Service Graph Decomposition is responsible to decompose and break-down the SFC service request into a list of sub-service graphs.

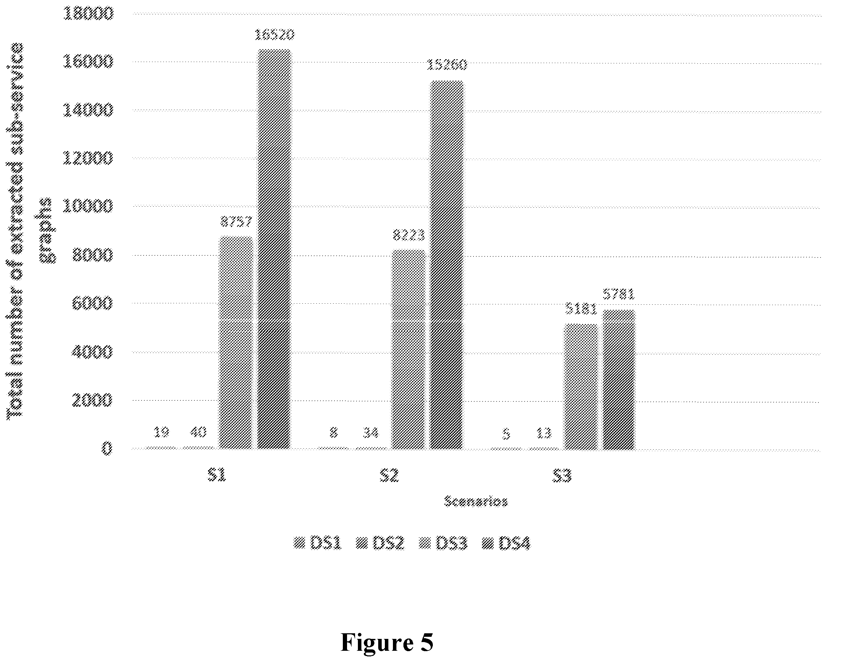

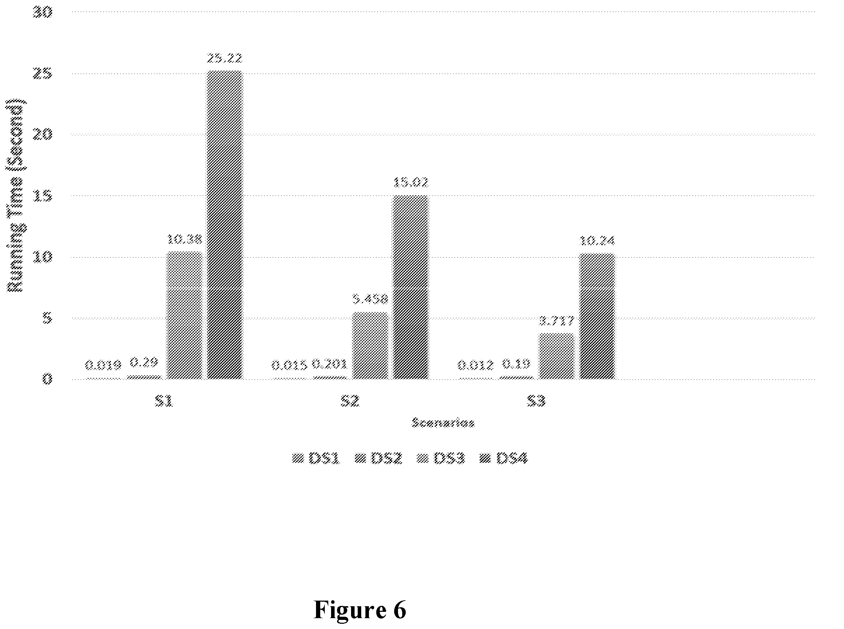

Looking at figure 5 and the results of running Scenarios *S1 S2 and S3* on one dataset *DS3,* it can be seen that the number of extracted sub-service of the same *DS3* (i.e., same number of service graphs) vary from one scenario to another according to the *"Percentage of common services"* value defined in each scenario. Hence, when the service graphs have common VNFs, VLs and attributes with the new SFC request, the number of extracted sub-services decrease, hence, the execution time to extract the sub-service decrease, as illustrated in figure 6.

As also illustrated in Figure 6, by increasing the number of service graphs in a dataset (i.e., NS catalog), the execution time is increased; since it requires more time to compare the new incoming request with the exist and deployed services for a large dataset than for a small dataset. For example, if we compare the result of running the worst-case scenario *S1* on all the generated datasets, it can be seen from figure 6 that the running time to extract the sub-service graphs using the gSpan algorithm is increased by increasing the number of service graphs in a dataset.

It can also be seen that mesh (i.e., non-linear) service graphs and virtual network service graph with large number of VNF nodes and VLs means more sub-graphs to be extracted, hence require more time to process.

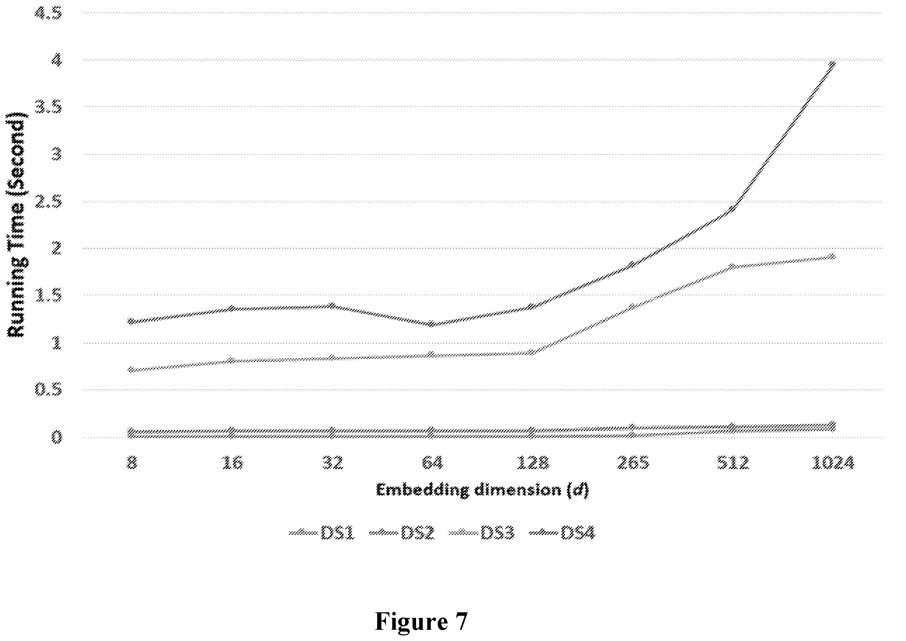

*Step2: Learning the virtual network service graph embedding:* Learning word, document and graph embedding are affected by one important parameter; the embedding dimension ($d$). The performance of the proposed method on the generated datasets, is affected by the different values of $d.$ As shown in figure 7, the execution time of service graph embedding grows exponentially when increasing the $d$. Therefore, a $d$ value of 128 is selected as the embedding dimension. Herein the running time is not affected by the scenarios, because the input to this step is the output of step1.

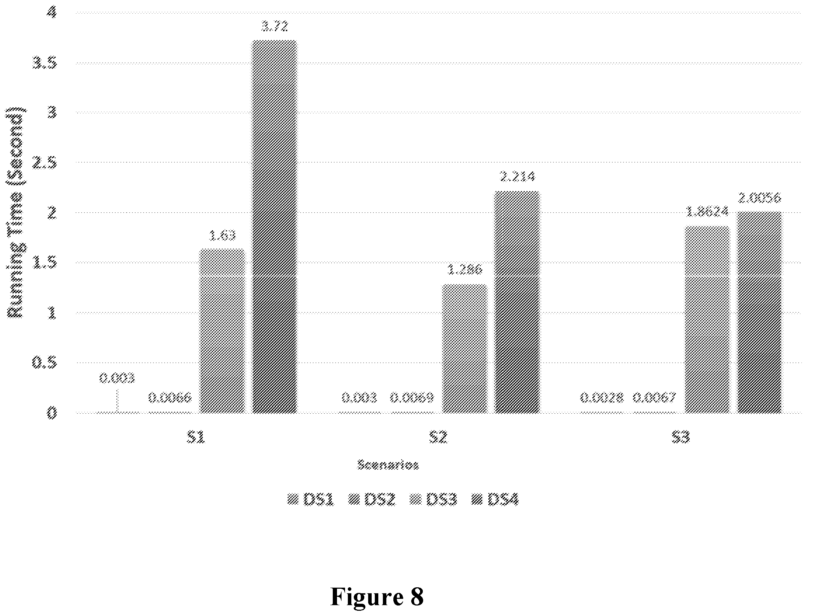

**Step3: Finding the similarity rate:** Then, when the SFC graph is mapped to a low-dimensional vector space, the last step is to evaluate the similarity rate between the new SFC request and the available services in each dataset. Figure 8 shows the execution time of step 3, running in all the generated datasets with all scenarios. It can be notice that execution time for this step depends on the total number of graphs in a given dataset.

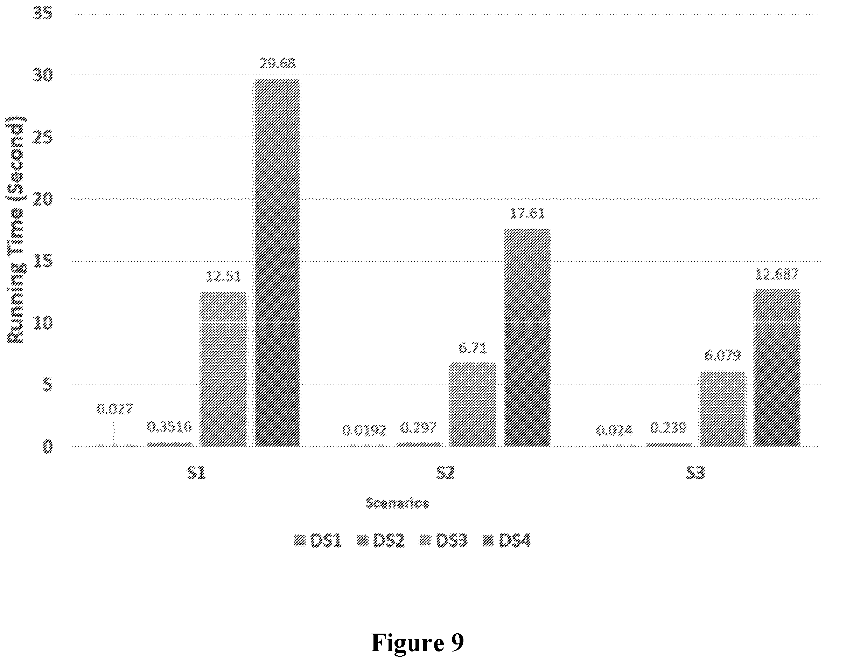

**Total execution time:** To measure the total execution time, it is assumed a request for a new SFC with 5 VNF nodes is received. The topology is mesh (i.e., non-linear), each VNF node has three attributes: the required CPU-cores, memory and storage. Similarly, each virtual link has three attributes: bandwidth, end-to-end delay, and the placement affinity/anti-affinity policy. It is worth mentioning that in previous work, the affinity/anti-affinity placement policies were not considered. Figure 9 shows the total processing time needed by the method to compute the similarity between the new incoming SFC request and the deployed service graphs in the NS catalog. It can be seen from Figure 9 that, in the worst case, when the new incoming SFC request has no exact similar service/subservice, it needs 29.86 seconds when the NFV-orchestrator has already deployed 1000 network service. This means that the new request will compare with 1000 service. It is worth mentioning that all the dataset was randomly generated.

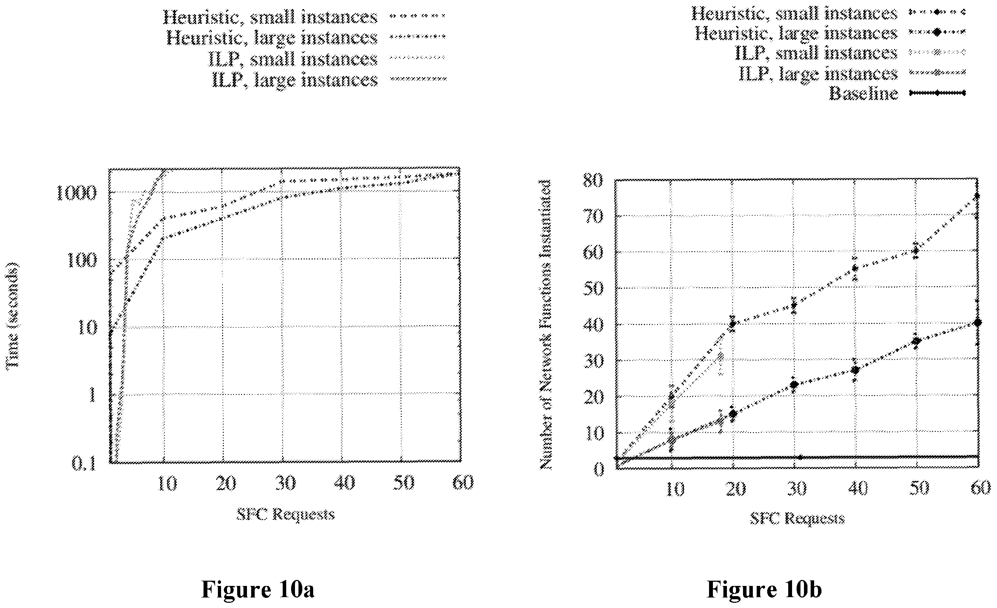

Figure 10a shows the time needed to find the mapping solution on different scenarios, without measuring the execution time to detect and resolve the conflicts between policies. Figure 10b shows the number of network functions instantiated compared to the number of SFC requests. It can be seen that one SFC request requires a small number of virtual network functions and that deployment requires more than 75 seconds even if the physical infrastructure is small. Using the proposed method, to check if the new SFC request has an exact matching with other deployed service or sub-service, saves time to detect if the policies are conflicted or redundant and resolves the conflicts if they exist and/or finds the mapping solution without invoking the placement and mapping algorithm.

One goal is to minimize the time needed to provision the new incoming SFC requests; this can be done by reducing the time required by the policy conflict and resolution algorithm and/or placement and mapping algorithm. There is no work in the literature that propose both policy conflict detection and resolution process and placement and mapping time to deploy new incoming SFC request. An average time of around 10 seconds is set as a goal, to detect and resolve the conflict and redundancy between the affinity and anti-affinity policies for a complex SFC request (e.g., number of VNFs is 10, topology is mesh, and each VNF has its affinity/anti-affinity policies). In the literature, the average time required by a placement and chaining algorithm using a math-heuristic technique to find the optimal solution to deploy the VNF nodes and virtual links of the mentioned SFC request is around 100 seconds.

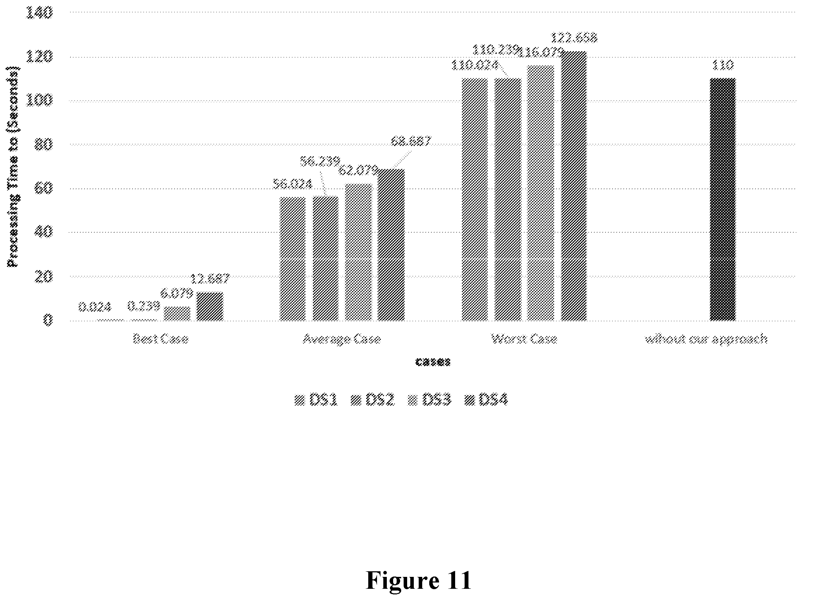

As shown in figure 11, the solution proposed herein may face three case: best case, average case and worst case. In the best case, the new incoming SFC request matches at least one exact service graph from the NS catalog and the hosted physical servers, where the VNF nodes and virtual links of the similar service are deployed, have enough resources to deploy the new incoming SFC request. In this case, there is no need to launch the policy conflict detection and resolution as well as the placement and chaining algorithm. Hence, the total time to find the solution is very small and corresponds to the time consumed by the similarity algorithms.

In the average case, the new incoming SFC request matches at least one exact service graph from NS catalog but the hosted physical servers where the VNF nodes and virtual links of the similar service are deployed do not have enough resources to deploy such a new incoming SFC request. Using the approach presented herein there is no need to launch the policy conflict detection and resolution algorithm. There can further be an indicator available for indicating what type of physical servers are appropriate to deploy the received SFC request according to the physical servers which host the similar services. Instead of taking into account all the physical servers and infrastructure to find the optimal solution to deploy the new service, the placement and chaining algorithm considers only a subset of physical servers with a specific type or specific characteristics. Hence, the total time to find the solution is the time required by the proposed algorithm and less than the usual time needed by placement algorithm known in the literature (because the choices of physical servers is minimized).

In the worst case, the new incoming SFC request did not match any of the service graph from the NS catalog (i.e., not similar to a service/sub-service graphs). In this case, the usual steps have to be executed and both policy conflict and resolution algorithm and the placement and mapping methods are launched. Hence, the total time to find the solution is the time required by the proposed algorithm, policy conflict and resolution algorithm time and placement and mapping algorithm time.

Accordingly, there are large differences in processing time to deploy the new SFC request according to these different scenarios. When comparing the worst case and the time required to deploy the new request without the present approach, the total time of the present approach is considered as an overhead to the usual time required to deploy the new service. However, in real deployed and running systems, it is expected that these scenarios would be mixed and that the average time needed to deploy a new SFC request would be well under the time obtained with methods previously presented in the literature. It is also worth mentioning that finding the similarity between services could be used as a base line for resource management and prediction methods.

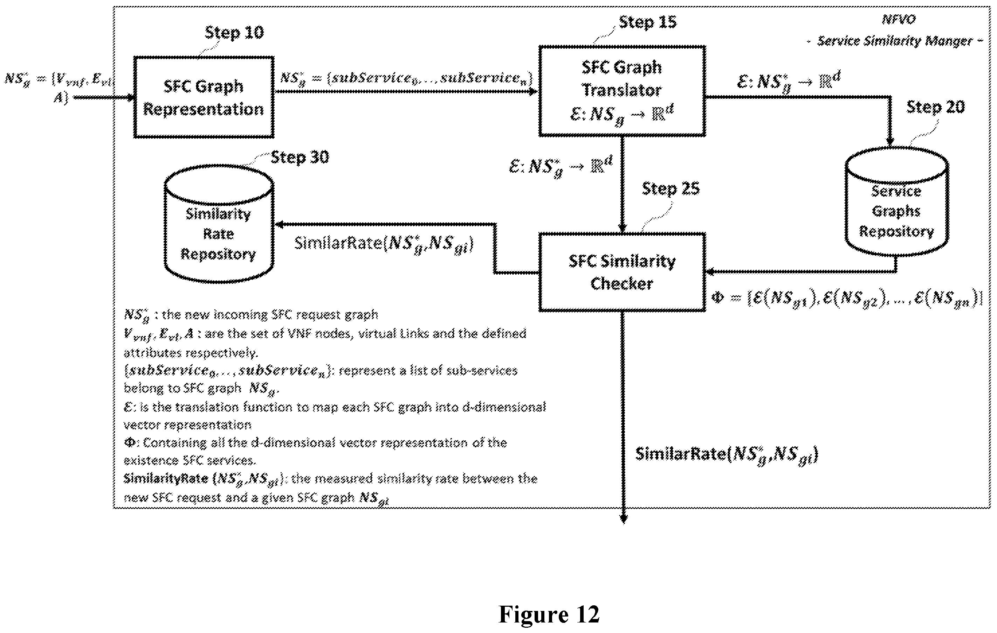

Figure 12 is a diagram showing the main components of the similarity manager framework. First, when the similarity manager receives a new SFC request, the Service Graph Decomposition starts by extracting the sub-service graphs of an SFC service request. In another word, the whole SFC is decomposed into a set of sub-service graphs using frequent sub-graph mining algorithm called "gSpan". Each sub-service graph consists of at least two connected VNF nodes with their attributes (step 10). The main idea behind frequent sub-graph mining (FSM) is to increase the number of candidate subgraphs, in either a breadth-first or depth-first manner (candidate generation) and then determine whether the identified candidate sub-graphs occur frequently enough in the NS dataset for them to be considered as interesting candidate (support counting). Depth-first search gSpan method can be used to find the candidate frequent subgraphs.

The frequent sub-graphs of the SFC request are then translated to a vector representation to ease the similarity detection between a new SFC request and the deployed SFCs (step 15). The output of the SFC graph translator, which consists of vector representation, is stored in a service graph repository (Step 20). The generated vector is used to find exact or partial matching between a new SFC request and deployed SFCs while considering thresholds between 0.99 and 1 for exact matching and between 0.7 and 0.99 for partial matching (step 25). The step 25 uses cosine similarity in a vector space to find matching between a new SFC request and the vector representation of the deployed SFCs. The similarity rates generated at step 25 are stored in a similarity rate repository (step 30).

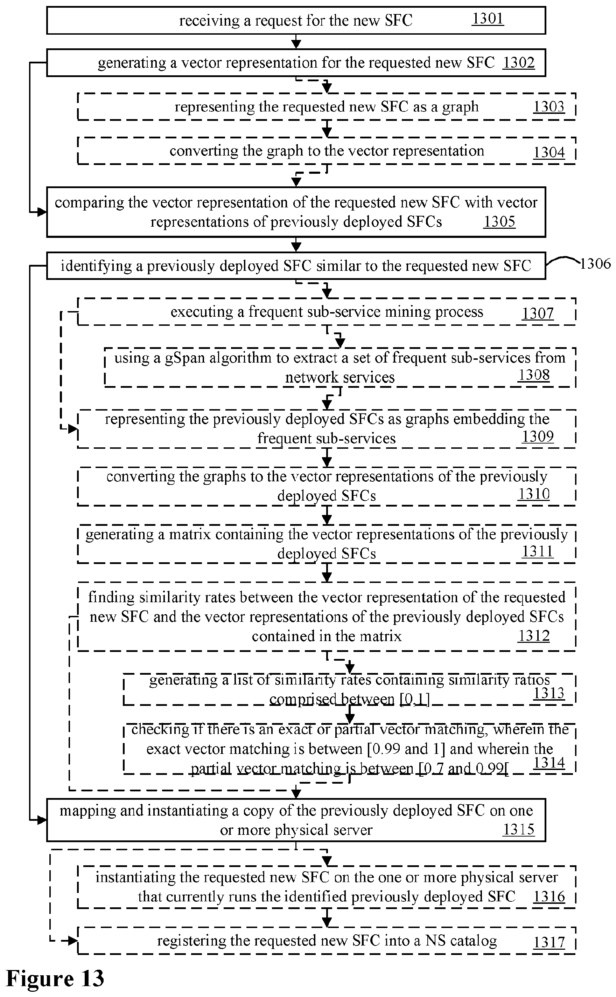

Figure 13 illustrates a method for deploying a new service function chain (SFC) based on similarities with previously deployed SFCs, comprising:

- receiving a request for the new SFC, step 1301;
- generating a vector representation for the requested new SFC, step 1302;
- comparing the vector representation of the requested new SFC with vector representations of previously deployed SFCs, step 1305;
- identifying a previously deployed SFC similar to the requested new SFC, step 1306; and
- mapping and instantiating a copy of the previously deployed SFC on a (one or more) physical server, step 1315.

Generating a vector representation for the requested new SFC may comprise representing the requested new SFC as a graph, step 1303, and converting the graph to the vector representation, step 1304.

The graph representing the requested new SFC may comprise VNF nodes, links and attributes.

Identifying a previously deployed SFC similar to the requested new SFC may comprise executing a frequent sub-service mining process, step 1307, executing a graph embedding, steps 1309-1311, and finding a similarity rate between the requested new SFC and the previously deployed SFCs, step 1312.

Executing graph embedding may comprise outputting a matrix containing vector representations of SFC service graphs. Executing graph embedding may comprise executing algorithm 3.

Identifying a previously deployed SFC similar to the requested new SFC may comprise executing a frequent sub-service mining process, step 1307; representing the previously deployed SFCs as graphs embedding the frequent sub-services, step 1309; converting the graphs to the vector representations of the previously deployed SFCs, step 1310; generating a matrix containing the vector representations of the previously deployed SFCs, step 1311; and finding similarity rates between the vector representation of the requested new SFC and the vector representations of the previously deployed SFCs contained in the matrix, step 1312.

Executing the frequent sub-service mining process may comprise executing algorithm 2.

Executing the frequent sub-service mining process may comprise using a gSpan algorithm to extract a set of frequent sub-services from network services, step 1308.

Finding a similarity rate may comprise generating a list of similarity rates containing similarity ratios comprised between [0,1], step 1313.

Finding a similarity rate may comprise checking if there is an exact or partial vector matching, wherein the exact vector matching is between [0.99 and 1] and wherein the partial vector matching is between [0.7 and 0.99[, step 1314.

Finding a similarity rate may comprise executing algorithm 4.

Partial matching may mean that at least some sub-services are exactly matching.

Mapping and instantiating may comprise, if (or upon detection that) the (one or more) physical server running the identified previously deployed SFC has available capacity, deploying the new requested SFC by mapping to the identified previously deployed SFC and instantiating the requested new SFC on the (one or more) physical server that currently runs the identified previously deployed SFC, step 1316.

Mapping and instantiating may comprise, if the (one or more) physical server running the identified previously deployed SFC has no available capacity, deploying the new requested SFC by mapping to the identified previously deployed SFC and instantiating the requested new SFC on a (one or more) other physical server.

Prior to instantiating the requested new SFC on the (one or more) other physical server, there may be a step of checking policy redundancy and conflict detection to identify the (one or more) other physical server.

Mapping may comprise duplicating or copying, the identified previously deployed SFC and/or at least some of its components.

The method further comprises registering the requested new SFC into a NS catalog, step 1317.

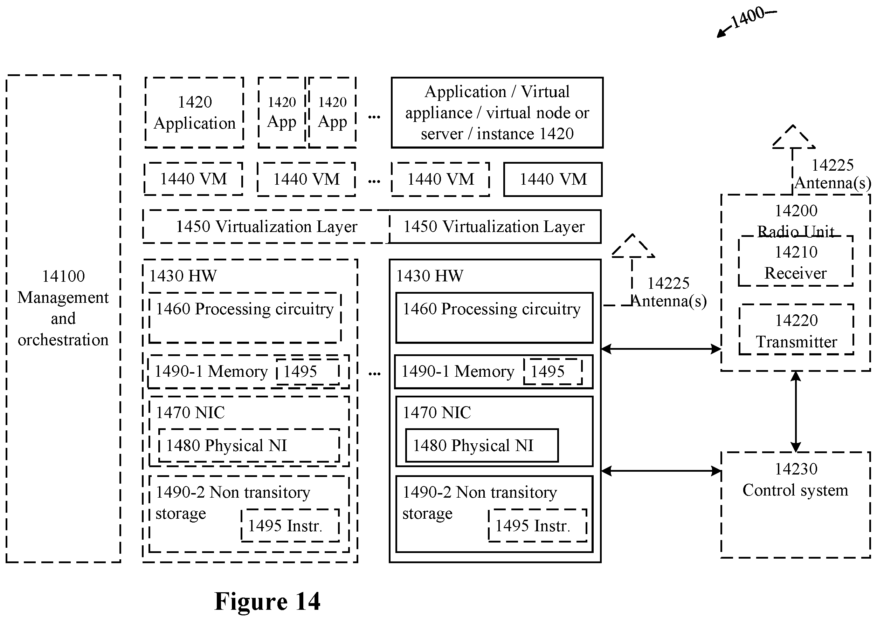

Figure 14 is a schematic block diagram illustrating a virtualization environment 1400 in which some functions may be virtualized. Figure 14 is similar to the system of figure 2 but may slightly differ. As used herein, virtualization relates to an implementation in which at least a portion of the functionality is implemented as one or more virtual components (e.g., via one or more applications, components, functions, virtual machines or containers executing on one or more physical processing nodes in one or more networks).

Some or all of the functions described herein may be implemented as virtual components executed by one or more virtual machines or containers implemented in one or more virtual environments 1400 hosted by one or more of hardware nodes 1430. Further, when the virtual node is not a radio access node or does not require radio connectivity (e.g., a core network node), then the network node may be entirely virtualized.

The functions may be implemented by one or more applications 1420 (which may alternatively be called software instances, virtual appliances, network functions, virtual nodes, virtual network functions, etc.) operative to implement steps of some methods described herein. Applications 1420 run in virtualization environment 1400 which provides hardware 1430 comprising processing circuitry 1460 and memory 1490. Memory 1490 contains instructions 1495 executable by processing circuitry 1460 whereby application 1420 is operative to provide any of the relevant features, benefits, and/or functions disclosed herein.

Virtualization environment 1400, comprises general-purpose or special-purpose network hardware devices 1430 comprising a set of one or more processors or processing circuitry 1460, which may be commercial off-the-shelf (COTS) processors, dedicated Application Specific Integrated Circuits (ASICs), or any other type of processing circuitry including digital or analog hardware components or special purpose processors. Each hardware device may comprise memory 1490-1 which may be non-persistent memory for temporarily storing instructions 1495 or software executed by the processing circuitry 1460. Each hardware devices may comprise one or more network interface controllers 1470 (NICs), also known as network interface cards, which include physical network interface 1480. Each hardware devices may also include non-transitory, persistent, machine readable storage media 1490-2 having stored therein software 1495 and/or instruction executable by processing circuitry 1460. Software 1495 may include any type of software including software for instantiating one or more virtualization layers 1450 (also referred to as hypervisors), software to execute virtual machines 1440 or containers as well as software allowing to execute functions described herein.

Virtual machines 1440 or containers, comprise virtual processing, virtual memory, virtual networking or interface and virtual storage, and may be run by a corresponding virtualization layer 1450 or hypervisor. Different instances of virtual appliance 1420 may be implemented on one or more of virtual machines 1440 or containers, and the implementations may be made in different ways.

During operation, processing circuitry 1460 executes software 1495 to instantiate the hypervisor or virtualization layer 1450, which may sometimes be referred to as a virtual machine monitor (VMM). Virtualization layer 1450 may present a virtual operating platform that appears like networking hardware to virtual machine 1440 or to a container.

As shown in Figure 14, hardware 1430 may be a standalone network node, with generic or specific components. Hardware 1430 may comprise antenna 14225 and may implement some functions via virtualization. Alternatively, hardware 1430 may be part of a larger cluster of hardware (e.g. such as in a data center or customer premise equipment (CPE)) where many hardware nodes work together and are managed via management and orchestration (MANO) 14100, which, among others, oversees lifecycle management of applications 1420.

Virtualization of the hardware is in some contexts referred to as network function virtualization (NFV). NFV may be used to consolidate many network equipment types onto industry standard high-volume server hardware, physical switches, and physical storage, which can be located in data centers, and customer premise equipment.

In the context of NFV, a virtual machine 1440 or container is a software implementation of a physical machine that runs programs as if they were executing on a physical, non-virtualized machine. Each of virtual machines 1440 or container, and that part of the hardware 1430 that executes that virtual machine, be it hardware dedicated to that virtual machine and/or hardware shared by that virtual machine with others of the virtual machines 1440 or containers, forms a separate virtual network elements (VNE).

Still in the context of NFV, Virtual Network Function (VNF) is responsible for handling specific network functions that run in one or more virtual machines 1440 or containers on top of hardware networking infrastructure 1430 and corresponds to application 1420 in Figure 14.

One or more radio units 14200 that each include one or more transmitters 14220 and one or more receivers 14210 may be coupled to one or more antennas 14225. Radio units 14200 may communicate directly with hardware nodes 1430 via one or more appropriate network interfaces and may be used in combination with the virtual components to provide a virtual node with radio capabilities, such as a radio access node or a base station.

Some signaling can be effected with the use of control system 14230 which may alternatively be used for communication between the hardware nodes 1430 and the radio units 14200.

There is provided an apparatus, such as HW 1430, for deploying a new service function chain (SFC) based on similarities with previously deployed SFCs, comprising processing circuits and a memory, said memory containing instructions executable by said processing circuits whereby said apparatus is operative to execute any of the steps described herein.

There is provided a system, such as system 1400, or MANO 14100, for deploying a new service function chain (SFC) based on similarities with previously deployed SFCs comprising processing circuits and a memory, the memory containing instructions executable by the processing circuits whereby the system is operative to execute any of the steps described herein.

There is provided a non-transitory computer readable media, such as non-transitory storage 1490-2, having stored thereon instructions for deploying a new service function chain (SFC) based on similarities with previously deployed SFCs, the instructions comprising any of the steps described herein.

Modifications will come to mind to one skilled in the art having the benefit of the teachings presented in the foregoing description and the associated drawings. The previous description is merely illustrative and should not be considered restrictive in any way. The scope sought is given by the appended claims, rather than the preceding description.

**Claims**

1. A method for deploying a new service function chain, SFC, based on similarities with previously deployed SFCs, comprising:

   - receiving (1301) a request for the new SFC;
   - generating (1302) a vector representation for the requested new SFC;
   - comparing (1305) the vector representation of the requested new SFC with vector representations of previously deployed SFCs;
   - identifying (1306) a previously deployed SFC similar to the requested new SFC; and
   - mapping (1315) and instantiating a copy of the previously deployed SFC on one or more physical server,
   wherein generating a vector representation for the requested new SFC comprises:

      - representing (1303) the requested new SFC as a graph; wherein the graph is composed of a list of sub-service graphs and
      - converting (1304) the graph to the vector representation, and

   wherein unsupervised learning based on Paragraph Vector Distributed Bag of Words, PV-DBOW, is used for learning how to convert graphs to the vector representations and for converting the graph to the vector representation, where the graph is considered as an input to the PV-DBOW model, where the graph is treated as a document and each sub-service graph as a word.

2. The method of claim 1, wherein the graph representing the requested new SFC comprises virtual network function, VNF, nodes, links and attributes.

3. The method of claim 1,
   wherein identifying a previously deployed SFC similar to the requested new SFC comprises:

      - executing (1307) a frequent sub-service mining process;
      - representing (1309) the previously deployed SFCs as graphs embedding the frequent sub-services;
      - converting (1310) the graphs to the vector representations of the previously deployed SFCs;
      - generating (1311) a matrix containing the vector representations of the previously deployed SFCs; and
      - finding (1312) similarity rates between the vector representation of the requested new SFC and the vector representations of the previously deployed SFCs contained in the matrix.

4. The method of claim 3, wherein executing the frequent sub-service mining process comprises using (1308) a gSpan algorithm to extract a set of frequent subservices from network services.

5. The method of claim 3, wherein finding a similarity rate comprises generating a list of similarity rates containing similarity ratios comprised between [0,1].

6. The method of claim 3, wherein finding a similarity rate comprises checking (1314) if there is an exact or partial vector matching, wherein the exact vector matching is between [0.99 and 1] and wherein the partial vector matching is between [0.7 and 0.99].

7. The method of claim 1, wherein mapping and instantiating comprises, upon detecting that the one or more physical server running the identified previously deployed SFC has available capacity, instantiating (1316) the requested new SFC on the one or more physical server that currently runs the identified previously deployed SFC.

8. The method of claim 1, wherein mapping and instantiating comprises, upon detecting that the one or more physical server running the identified previously deployed SFC does not have available capacity, instantiating (1316) the requested new SFC on one or more other physical server.

9. The method of claim 8, further comprising, prior to instantiating the requested new SFC on the one or more other physical server, checking policy redundancy and
conflict detection to identify the one or more other physical server.

10. The method of claim 1, wherein mapping comprises duplicating or copying, the identified previously deployed SFC.

11. The method of claim 1, further comprising registering (1317) the requested new SFC into a network services, NS, catalog.

12. A system for deploying a new service function chain, SFC, based on similarities with previously deployed SFCs comprising processing circuits and a memory, the memory containing instructions executable by the processing circuits whereby the system is operative to execute the steps of any of claims 1 to 11.

13. The system of claim 12, wherein the system comprises a Network Function Virtualization, NFV, MAnagement and Network Orchestration, NFV-MANO, executing any of the steps of claims 1 to 11.

14. A non-transitory computer readable medium having stored thereon instructions which, when executed by a system according to any of claims 12 or 13, deploy a new service function chain, SFC, based on similarities with previously deployed SFCs, the instructions comprising the steps of any of claims 1 to 11.

**Patentansprüche**

1. Verfahren zum Einsetzen einer neuen Dienstfunktionskette, SFC, basierend auf Ähnlichkeiten mit zuvor eingesetzten SFCs, beinhaltend:

   - Empfangen (1301) einer Anforderung für die neue SFC;
   - Erzeugen (1302) einer Vektordarstellung für die angeforderte neue SFC;
   - Vergleichen (1305) der Vektordarstellung der angeforderten neuen SFC mit Vektordarstellungen von zuvor eingesetzten SFCs;
   - Identifizieren (1306) einer zuvor eingesetzten SFC, die der angeforderten neuen SFC ähnlich ist; und
   - Abbilden (1315) und Instanziieren einer Kopie der zuvor eingesetzten SFC auf einem oder mehreren physischen Servern,
   wobei das Erzeugen einer Vektordarstellung für die angeforderte neue SFC Folgendes beinhaltet:

      - Darstellen (1303) der angeforderten neuen SFC als einen Graphen; wobei der Graph aus einer Liste von Unterdienstgraphen besteht und
      - Umwandeln (1304) des Graphen in die Vektordarstellung, und

   wobei unüberwachtes Lernen basierend auf Paragraph Vector Distributed Bag of Words, PV-DBOW, zum Lernen, wie Graphen in die Vektordarstellungen umgewandelt werden sollen, und zum Umwandeln des Graphen in die Vektordarstellung verwendet wird, wobei der Graph als eine Eingabe in das PV-DBOW-Modell betrachtet wird, wobei der Graph als ein Dokument und jeder Unterdienstgraph als ein Wort behandelt wird.

2. Verfahren gemäß Anspruch 1, wobei der Graph, der die angeforderte neue SFC darstellt, Knoten, Links und Attribute einer virtuellen Netzwerkfunktion, VNF, beinhaltet.

3. Verfahren gemäß Anspruch 1, wobei das Identifizieren einer zuvor eingesetzten SFC, die der angeforderten neuen SFC ähnlich ist, Folgendes beinhaltet:

   - Durchführen (1307) eines häufigen Unterdienst-Mining-Prozesses;
   - Darstellen (1309) der zuvor eingesetzten SFCs als Graphen, die die häufigen Unterdienste einbetten;
   - Umwandeln (1310) der Graphen in die Vektordarstellungen der zuvor eingesetzten SFCs;
   - Erzeugen (1311) einer Matrix, die die Vektordarstellungen der zuvor eingesetzten SFCs enthält; und
   - Finden (1312) von Ähnlichkeitsraten zwischen der Vektordarstellung der angeforderten neuen SFC und den Vektordarstellungen der zuvor eingesetzten SFCs, die in der Matrix enthalten sind.

4. Verfahren gemäß Anspruch 3, wobei das Durchführen des häufigen Unterdienst-Mining-Prozesses das Verwenden (1308) eines gSpan-Algorithmus zum Extrahieren eines Satzes von häufigen Unterdiensten aus Netzwerkdiensten beinhaltet.

**5.** Verfahren gemäß Anspruch 3, wobei das Finden einer Ähnlichkeitsrate das Erzeugen einer Liste von Ähnlichkeitsraten beinhaltet, die Ähnlichkeitsverhältnisse enthält, die zwischen [0,1] umfassen.

**6.** Verfahren gemäß Anspruch 3, wobei das Finden einer Ähnlichkeitsrate das Prüfen (1314) beinhaltet, ob es eine exakte oder teilweise Vektorübereinstimmung gibt, wobei die exakte Vektorübereinstimmung zwischen [0,99 und 1] liegt und wobei die teilweise Vektorübereinstimmung zwischen [0,7 und 0,99] liegt.

**7.** Verfahren gemäß Anspruch 1, wobei das Abbilden und Instanziieren nach dem Detektieren, dass der eine oder die mehreren physischen Server, die die identifizierte zuvor eingesetzte SFC ausführen, verfügbare Kapazität aufweisen, das Instanziieren (1316) der angeforderten neuen SFC auf dem einen oder den mehreren physischen Servern, die aktuell die identifizierte zuvor eingesetzte SFC ausführen, beinhaltet.

**8.** Verfahren gemäß Anspruch 1, wobei das Abbilden und Instanziieren nach dem Detektieren, dass der eine oder die mehreren physischen Server, die die identifizierte zuvor eingesetzte SFC ausführen, keine verfügbare Kapazität aufweisen, das Instanziieren (1316) der angeforderten neuen SFC auf einem oder mehreren anderen physischen Servern beinhaltet.

**9.** Verfahren gemäß Anspruch 8, das ferner vor dem Instanziieren der angeforderten neuen SFC auf dem einen oder den mehreren anderen physischen Servern das Prüfen von Richtlinienredundanz und Konfliktdetektion, um den einen oder die mehreren anderen physischen Server zu identifizieren, beinhaltet.

**10.** Verfahren gemäß Anspruch 1, wobei das Abbilden das Duplizieren oder Kopieren der identifizierten zuvor eingesetzten SFC beinhaltet.

**11.** Verfahren gemäß Anspruch 1, das ferner das Registrieren (1317) der angeforderten neuen SFC in einem Katalog von Netzwerkdiensten, NS, beinhaltet.

**12.** Ein System zum Einsetzen einer neuen Dienstfunktionskette, SFC, basierend auf Ähnlichkeiten mit zuvor eingesetzten SFCs, das Verarbeitungsschaltungen und einen Speicher beinhaltet, wobei der Speicher Anweisungen enthält, die durch die Verarbeitungsschaltungen durchführbar sind, wodurch das System betriebsfähig ist, um die Schritte gemäß einem der Ansprüche 1 bis 11 auszuführen.

**13.** System gemäß Anspruch 12, wobei das System eine Netzwerkfunktionsvirtualisierungs(NFV)-Verwaltung-und-Netzwerkorchestrierung, NFV-MANO, beinhaltet, die einen der Schritte gemäß den Ansprüchen 1 bis 11 durchführt.

**14.** Ein nicht transitorisches computerlesbares Medium, auf dem Anweisungen gespeichert sind, die, wenn sie durch ein System gemäß einem der Ansprüche 12 oder 13 durchgeführt werden, eine neue Dienstfunktionskette, SFC, basierend auf Ähnlichkeiten mit zuvor eingesetzten SFCs einsetzen, wobei die Anweisungen die Schritte gemäß einem der Ansprüche 1 bis 11 beinhalten.

**Revendications**

**1.** Un procédé pour le déploiement d'une nouvelle chaîne de fonctions service, SFC (*Service Function Chain*), sur la base de similarités avec des SFC précédemment déployées, comprenant :

- la réception (1301) d'une demande de nouvelle SFC ;
- la génération (1302) d'une représentation vectorielle pour la nouvelle SFC demandée ;
- la comparaison (1305) de la représentation vectorielle de la nouvelle SFC demandée avec des représentations vectorielles de SFC précédemment déployées ;
- l'identification (1306) d'une SFC précédemment déployée similaire à la nouvelle SFC demandée ; et
- le mappage (1315) et l'instanciation d'une copie de la SFC précédemment déployée sur un ou plusieurs serveurs physiques,
où la génération d'une représentation vectorielle pour la nouvelle SFC demandée comprend :

- la représentation (1303) de la nouvelle SFC demandée sous forme de graphe ; où le graphe est composé d'une liste de graphes de sous-service et
- la conversion (1304) du graphe en représentation vectorielle, et

où un apprentissage non supervisé basé sur PV-DBOW (*Paragraph Vector Distributed Bag Of Words*) est utilisé pour apprendre comment convertir des graphes en représentations vectorielles et pour convertir le graphe en représentation vectorielle, où le graphe est considéré comme une entrée dans le modèle PV-DBOW, où le graphe est traité comme un document et chaque graphe de sous-service comme un mot.

2. Le procédé de la revendication 1, où le graphe représentant la nouvelle SFC demandée comprend des nœuds, des liaisons et des attributs de fonction réseau virtuelle, VNF (*Virtual Network Function*).

3. Le procédé de la revendication 1, où l'identification d'une SFC précédemment déployée similaire à la nouvelle SFC demandée comprend :

   - l'exécution (1307) d'un processus de fouille de sous-services fréquents ;
   - la représentation (1309) des SFC précédemment déployées sous forme de graphes intégrant les sous-services fréquents ;
   - la conversion (1310) des graphes en représentations vectorielles des SFC précédemment déployées ;
   - la génération (1311) d'une matrice contenant les représentations vectorielles des SFC précédemment déployées ; et
   - la recherche (1312) de taux de similarité entre la représentation vectorielle de la nouvelle SFC demandée et les représentations vectorielles des SFC précédemment déployées contenues dans la matrice.

4. Le procédé de la revendication 3, où l'exécution du processus de fouille de sous-services fréquents comprend l'utilisation (1308) d'un algorithme gSpan pour extraire un ensemble de sous-services fréquents de services de réseau.

5. Le procédé de la revendication 3, où la recherche d'un taux de similarité comprend la génération d'une liste de taux de similarité contenant des rapports de similarité compris entre [0,1].

6. Le procédé de la revendication 3, où la recherche d'un taux de similarité comprend la vérification (1314) s'il y a une correspondance vectorielle exacte ou partielle, où la correspondance vectorielle exacte est comprise entre [0,99 et 1] et où la correspondance vectorielle partielle est comprise entre [0,7 et 0,99].

7. Le procédé de la revendication 1, où le mappage et l'instanciation comprend, dès détection que les un ou plusieurs serveurs physiques exécutant la SFC précédemment déployée identifiée ont une capacité disponible, l'instanciation (1316) de la nouvelle SFC demandée sur les un ou plusieurs serveurs physiques qui exécutent actuellement la SFC précédemment déployée identifiée.

8. Le procédé de la revendication 1, où le mappage et l'instanciation comprend, dès détection que les un ou plusieurs serveurs physiques exécutant la SFC précédemment déployée identifiée n'ont pas de capacité disponible, l'instanciation (1316) de la nouvelle SFC demandée sur un ou plusieurs autres serveurs physiques.

9. Le procédé de la revendication 8, comprenant en outre, préalablement à l'instanciation de la nouvelle SFC demandée sur les un ou plusieurs autres serveurs physiques, la vérification d'une détection de conflit et redondance de politiques pour identifier les un ou plusieurs autres serveurs physiques.

10. Le procédé de la revendication 1, où le mappage comprend la duplication ou la copie de la SFC précédemment déployée identifiée.

11. Le procédé de la revendication 1, comprenant en outre l'enregistrement (1317) de la nouvelle SFC demandée dans un catalogue de services de réseau, NS (*Network Services*).

12. Un système pour le déploiement d'une nouvelle chaîne de fonctions service, SFC, sur la base de similarités avec des SFC précédemment déployées comprenant des circuits de traitement et une mémoire, la mémoire contenant des instructions exécutables par les circuits de traitement moyennant quoi le système est opérationnel pour exécuter les étapes de n'importe lesquelles des revendications 1 à 11.

13. Le système de la revendication 12, où le système comprend un outil NFV-MANO (*Network Function Virtualization, NFV, Management and Network Orchestration,* gestion et orchestration réseau de virtualisation de fonction réseau, NFV) exécutant n'importe lesquelles des étapes des revendications 1 à 11.

14. Un support lisible par ordinateur non transitoire sur lequel sont stockées des instructions qui, lorsqu'elles sont exécutées par un système selon n'importe lesquelles des revendications 12 ou 13, déploient une nouvelle chaîne de fonctions service, SFC, sur la base de similarités avec des SFC précédemment déployées, les instructions comprenant les étapes de n'importe lesquelles des revendications 1 à 11.

**Figure 1**

BSS/OSS

SFC Graph Representation

SFC Graph Translator

SFC Similarity Checker

VNF Orchestrator (NFVO)

Similarity Manager

VNF Manager (s)

Virtualized Infrastructure Manager (VIM)

Management and Orchestration (MANO)

VNF ········· VNF VNF

Virtualized Network Functions (VNFs)

VM VM VM

Virtualization Layer

Computing Hardware

Storage Hardware

Network Hardware

NFV Infrastructure (NFVI)

Figure 2

**Algorithm 1: SFC Service Checker**

---

**Input:** New SFC request $NS^{\cdot}{}_{g}$

**Input:** $NS_{catalog} = \{NS_{g1}, \ldots, NS_{gn}\}$; containing all available deployed service graphs.

**Input:** $\delta$ minimum support threshold.

**Input:** $d$ embedding vector dimension.

**Output:** a list of *SimilarityRate* identifying the similarity between the new SFC request and the available SFC services in $NS_{catalog}$.

**Procedure SFC_Similarity**

/* Initializing a new set containing the new SFC request and the available SFC */

1. $NS_{G} = NS_{catalog} \cup \{NS^{\cdot}{}_{g}\}$

2. Execute the frequent sub-service mining process with $(NS_{G}, \delta)$ using gSpan algorithm, to extract the set of frequent sub-service from $NS_{G}$ and store it into $Freq\_subNS(NS_{G})$.

3. **for each** SFC graph $NS_{gi} \in NS_{G}$ **do:**

/*Initialize a list of $Freq\_subNS(NS_{gi})$ to obtain the associated sub-services */

4. $Freq\_subNS(NS_{gi}) = \emptyset$

5. Execute Algorithm 2, to associate each SFC service $NS_{gi}$ with a set of frequent sub-service from $Freq\_subNS(NS_{G})$ and store the sub-service into $Freq\_subNS(NS_{gi})$.

6. **end for**

/* Learn SFC service embedding (translating) */

7. Initialize a matrix $\Phi$ containing the vector representation of SCF graphs $NS_{G}$, $\Phi \in \mathbb{R}^{|NS_{G}| \times d}$.

8. **for each** SFC graph $NS_{gi} \in NS_{G}$ **do:**

9. Execute Algorithm 3, to obtain the embedding representation of $NS_{gi}$

10. **end for**

/*Finding the similarity rate between the new SFC request and the available SFC services.*/

11. **for each** $NS_{gi} \in NS_{catalog}$ **do:**

12. Execute Algorithm 4, to find the similarity rate between $(NS^{\cdot}{}_{g}, NS_{gi})$.

13. **end for**

/*Check if the new SFC request has an exact match with the deployed service from $NS_{catalog}$ */

14. **for each** $s \in similarityRate$ **do:**

15. **if** $(0.99 < s \leq 1)$ **then:**

16. $NS^{\cdot}{}_{g} \equiv NS_{g[s]}$

17. **else if** $(0.70 < s \leq 0.99)$ **then:**

18. $NS^{\cdot}{}_{g} \subseteq NS_{g[s]}$

19. **end if**

20. **end for**

**end Procedure**

**Figure 3a**

**Algorithm 2: SFC Subservices Extraction**

---

**Input:** An SFC network service graph $NS_{gi}$

**Input:** $\mathcal{F}req\_subNS(NS_G)$ containing all the frequent subservices obtained using gSpan algorithm.

**Output:** a list $\mathcal{F}req\_subNS(NS_{gi})$ containing the associated subservices.

**Procedure** $SFC_{subServices}$

1. **for each** $subNS_j \in \mathcal{F}req\_subNS(NS_G)$ **do:**

2.    **if** $subNS_j \subseteq NS_{gi}$ **then:**

3.       $\mathcal{F}req\_subNS(NS_{gi}) = \mathcal{F}req_{subNS}(NS_{gi}) \cup \{subNS_j\}$

4.    **end if**

5. **end for**

**end Procedure**

## Figure 3b

**Algorithm 3: SFC Network Service Graph Embedding**

---

**Input:** An SFC network service graph $NS_{gi}$

**Input:** $\mathcal{F}req\_subNS(NS_{gi})$ containing the associated subservices obtained using Algorithm 2.

**Output:** A matrix $\Phi$ containing the vector representation of SFC service graphs

**Procedure Service_Graph_Embedding**

1. **for each** $subNS_j \in \mathcal{F}req\_subNS(NS_{gi})$ **do:**

2.    $\mathcal{E}(\Phi) = -logPr(subNS_j|NS_{gi})$

3.    $\Phi = \Phi - \alpha \frac{\partial \mathcal{E}(\Phi)}{\partial \Phi}$

4. **end for**

**end Procedure**

## Figure 3c

**Algorithm 4: Similarity Rate**

---

**Input:** An SFC network service graph $NS_{gi}$

**Input:** An SFC network service graph $NS_{gj}$

**Input:** A matrix $\Phi$ containing the vector representation of SFC service graphs obtained using Algorithm 3

**Output:** a list of SimilarityRate containing similarity ratio between [0,1]

**Procedure SFC_Similarity_Calculation**

1. $\textbf{SimilarityRate}(NS_{gi}, NS_{gj}) = \text{SimilarityRate} \cup \{$
$$\frac{\Phi(NS^*_{g}) \cdot \Phi(NS_{gi})}{\|\Phi(NS^*_{g})\| \|\Phi(NS_{gi})\|}\}$$

**end Procedure**


# Figure 3d

$G_i = (N_i, E_i, L_i)$

**Graph embedding**
$$f : G_i \rightarrow R^d$$

d- dimensional Vector representation

$$\begin{bmatrix} 1.2 & 0.986 & 0.52 \\ 0.258 & 1.879 & \vdots \\ \square & \cdots & \square \end{bmatrix}$$

**Figure 4a**

$f(G_i), f(G_j)$

**Cosine Similarity**

Value between $[0,1]$, $G_i$, $G_j$ are similar if $f(G_i), f(G_j)$ are close to each other in vector space

**Figure 4b**

EP 3 987 396 B1

**Figure 5**

Figure 6

Figure 7

Figure 8

Figure 9

**Figure 10b**

**Figure 10a**

Figure 11

Step 10

$NS_g^* = \{V_{vnf}, E_{vl}, A\}$

**SFC Graph Representation**

$NS_g^* = \{subService_0, \ldots, subService_n\}$

Step 15

**SFC Graph Translator**
$\mathcal{E}: NS_g \to \mathbb{R}^d$

$\mathcal{E}: NS_g^* \to \mathbb{R}^d$

NFVO
- Service Similarity Manger -

Step 20

**Service Graphs Repository**

$\mathcal{E}: NS_g^* \to \mathbb{R}^d$

Step 30

**Similarity Rate Repository**

$SimilarRate(NS_g^*, NS_{gi})$

Step 25

**SFC Similarity Checker**

$\Phi = \{\mathcal{E}(NS_{g1}), \mathcal{E}(NS_{g2}), \ldots, \mathcal{E}(NS_{gn})\}$

$NS_g^*$ : the new incoming SFC request graph
$V_{vnf}, E_{vl}, A$ : are the set of VNF nodes, virtual Links and the defined attributes respectively.
$\{subService_0, \ldots, subService_n\}$: represent a list of sub-services belong to SFC graph $NS_g$.
$\mathcal{E}$: is the translation function to map each SFC graph into d-dimensional vector representation
$\Phi$: Containing all the d-dimensional vector representation of the existence SFC services.
SimilarityRate $(NS_g^*, NS_{gi})$: the measured similarity rate between the new SFC request and a given SFC graph $NS_{gi}$

$SimilarRate(NS_g^*, NS_{gi})$

**Figure 12**

| receiving a request for the new SFC | 1301 |

↓

| generating a vector representation for the requested new SFC | 1302 |

↓

| representing the requested new SFC as a graph | 1303 |

↓

| converting the graph to the vector representation | 1304 |

↓

| comparing the vector representation of the requested new SFC with vector representations of previously deployed SFCs | 1305 |

↓

| identifying a previously deployed SFC similar to the requested new SFC |   ⌐1306

↓

| executing a frequent sub-service mining process | 1307 |

↓

| using a gSpan algorithm to extract a set of frequent sub-services from network services | 1308 |

↓

| representing the previously deployed SFCs as graphs embedding the frequent sub-services | 1309 |

↓

| converting the graphs to the vector representations of the previously deployed SFCs | 1310 |

↓

| generating a matrix containing the vector representations of the previously deployed SFCs | 1311 |

↓

| finding similarity rates between the vector representation of the requested new SFC and the vector representations of the previously deployed SFCs contained in the matrix | 1312 |

↓

| generating a list of similarity rates containing similarity ratios comprised between [0,1] | 1313 |

↓

| checking if there is an exact or partial vector matching, wherein the exact vector matching is between [0.99 and 1] and wherein the partial vector matching is between [0.7 and 0.99[ | 1314 |

↓

| mapping and instantiating a copy of the previously deployed SFC on one or more physical server | 1315 |

↓

| instantiating the requested new SFC on the one or more physical server that currently runs the identified previously deployed SFC | 1316 |

↓

| registering the requested new SFC into a NS catalog | 1317 |

**Figure 13**

| | 1420<br>Application | 1420<br>App | 1420<br>App | ... | Application / Virtual<br>appliance / virtual node or<br>server / instance 1420 |
|---|---|---|---|---|---|

| 1440 VM | 1440 VM | ... | 1440 VM | 1440 VM |
|---|---|---|---|---|

| 1450 Virtualization Layer | 1450 Virtualization Layer |
|---|---|

14225
Antenna(s)

14200
Radio Unit

14210
Receiver

1430 HW

1460 Processing circuitry

1430 HW

1460 Processing circuitry

14225
Antenna(s)

14220
Transmitter

| 1490-1 Memory | 1495 | ... | 1490-1 Memory | 1495 |
|---|---|---|---|---|

1470 NIC

1480 Physical NI

1470 NIC

1480 Physical NI

1490-2 Non transitory
storage

1495 Instr.

1490-2 Non transitory
storage

1495 Instr.

14230
Control system

14100
Management
and
orchestration

1400

**Figure 14**

**EP 3 987 396 B1**

REFERENCES CITED IN THE DESCRIPTION

**Patent documents cited in the description**

- US 2017126792 A1